# EUROPÄISCHE PATENTSCHRIFT

(11) **EP 3 649 545 B1**
(45) Veröffentlichungstag und Bekanntmachung des Hinweises auf die Patenterteilung: **18.09.2024**
(21) Anmeldenummer: 18733856.1
(22) Anmeldetag: 25.06.2018
(51) Int. Cl.: G06F 3/14, B60Q 3/00, G09G 3/20, G09G 3/34

(54) **VORRICHTUNG ZUM ANSTEUERN EINER LEUCHTEINHEIT**
DEVICE FOR ACTIVATING A LIGHT UNIT
DISPOSITIF D'ACTIVATION D'UN ENSEMBLE D'ÉCLAIRAGE

(30) Priorität: 05.07.2017 DE 102017211471
(43) Veröffentlichungstag der Anmeldung: 13.05.2020
(73) Patentinhaber: Bayerische Motoren Werke Aktiengesellschaft, 80809 München (DE)
(72) Erfinder: ISELE, Robert, 82256 Fuerstenfeldbruck (DE); ALTINGER, Florian, 80807 München (DE); BRUEGL, Juergen, 81669 Muenchen (DE)
(86) Internationale Anmeldenummer: PCT/EP2018/066844
(87) Internationale Veröffentlichungsnummer: WO 2019/007716

(56) Entgegenhaltungen:
- WO-A1-2016/059847
- DE-A1- 102008 037 977
- DE-A1- 102015 007 862
- DE-B4- 102015 210 887
- US-A1- 2007 120 808
- US-A1- 2011 063 510
- US-A1- 2017 309 236

## Beschreibung

Die Erfindung betrifft ein Kraftfahrzeug mit einem Bildschirm zur optischen Signalisierung von veränderlichen Informationen, mit einer Innenraumbeleuchtung, die eine Anzahl an Lichtquellen umfasst, sowie mit einer Steuereinheit zum Ansteuern der Leuchteinheit und des Bildschirms.

Es ist bekannt, für die Innenraumbeleuchtung eines Fahrzeugs eine Konturlinienbeleuchtung und/oder Flächenleuchten zu verwenden, welche primär den Zweck einer Akzentbeleuchtung erfüllt. Eine solche Beleuchtungsvorrichtung umfasst eine oder zwei Lichtquellen und einen Lichtwellenleiter, wobei das von der Lichtquelle emittierte Licht über eine als Lichteinkoppelfläche ausgebildet Stirnfläche des Flächenlichtleiters in den Flächenlichtleiter eingekoppelt wird. Bei einer solchen Beleuchtungsvorrichtung sind statische Lichteffekte möglich, d.h. mittels der Lichtquelle kann die Helligkeit zwischen 0 % und 100 % reguliert werden, wobei die Helligkeit des Lichtleiters über dessen Länge jedoch immer konstant ist. In Abhängigkeit der von der Lichtquelle abgegebenen Lichtfarbe ist es darüber hinaus möglich, einen bestimmten Farbakzent zu erzielen, der ebenfalls über die Länge des Lichtleiters konstant ist. Eine solche Innenraumbeleuchtung ist beispielsweise aus der DE 10 2012 015 057 A1 bekannt.

Da eine hochwertige Innenraumbeleuchtung ein wesentliches Designmerkmal für ein Fahrzeug darstellt, besteht der Wunsch, die Innenraumbeleuchtung flexibler gestalten zu können. Eine flexiblere Innenraumbeleuchtung wird dadurch ermöglicht, dass Beleuchtungseinheiten mit einer Mehrzahl an Lichtquellen eingesetzt werden. Als Lichtquellen werden üblicherweise Leuchtdioden (LEDs) eingesetzt. Sowohl einfarbige als auch zur Abgabe von farbigem Licht fähige RGB-LEDs werden in der Regel mit LED-Treibern, die Konstantstromquellen sowie einen Regler zur Pulsweitenmodulation und so weiter umfassen, angesteuert. Die Ansteuerung der LED-Treiber erfolgt durch ein zentrales Steuergerät, welches die Lichtquellen der Beleuchtungseinheit in einer für ein bestimmtes Beleuchtungsszenario erforderlichen Weise ansteuert.

Es sind auch Lichtquellen mit integriertem Controller verfügbar, bei denen der LED-Treiber in jeder einzelnen LED integriert ist, so dass nur noch Datenleitungen zur Ansteuerung erforderlich sind. Eine solche Lichtquelle mit integriertem Controller verfügt z.B. über vier Anschlüsse, nämlich einen Betriebsspannungsanschluss, einen Masseanschluss, einen Dateneingangsanschluss und einen Datenausgangsanschluss. Je nach Ausgestaltung kann eine jeweilige Lichtquelle auch über sechs Anschlüsse verfügen, nämlich einen Betriebsspannungsanschluss, einen Masseanschluss, zwei Dateneingangsanschlüsse zur Realisierung eines Differentialsignaleingangs (mit Data High und Data Low) sowie zwei Datenausgangsanschlüsse zur Realisierung eines Differentialsignalausgangs (mit Data High und Data Low). Die Ansteuerung der Lichtquelle wird durch den in der Lichtquelle integrierten Controller vorgenommen. Ein solcher Controller enthält beispielsweise einen programmierbaren Konstantstrom-Treiber, einen Signalformer sowie für jeden Farbkanal ein Register, in das entsprechend der Registerbreite eine Anzahl an Helligkeitswerten geladen wird.

Diese neuartigen Lichtquellen mit integriertem Controller erlauben es, die Lichtquellen in einer Beleuchtungseinheit dicht aneinander zu reihen, so dass pro Meter zwischen einigen 10 bis über 100 Lichtquellen vorgesehen werden können. In einem Fahrzeug kann eine Mehrzahl derartiger Beleuchtungseinheiten mit einer jeweiligen Anzahl an Lichtquellen mit integriertem Controller vorgesehen werden. Zur Ansteuerung dieser Lichtquelle mit integriertem Controller muss für jede der Beleuchtungseinheiten ein Steuergerät oder alternativ ein gemeinsames Steuergerät für sämtliche Beleuchtungseinheiten in dem Fahrzeug vorgesehen werden. In der zuerst genannten Variante erfordert dies bei einer entsprechenden Anzahl bei Beleuchtungseinheiten eine hohe Anzahl an Steuergeräten, wodurch die Systemkosten in unerwünschter Weise ansteigen. Bei einem gemeinsamen, zentralen Steuergerät für sämtliche, in dem Kraftfahrzeug verbauten Beleuchtungseinheit sind aufwändige Steueralgorithmen vorzusehen, um jede Beleuchtungseinheiten in der gewünschten Weise sicher ansteuern zu können.

Die US 2017/0 309 236 A1 offenbart eine Anzeigevorrichtung mit einem LCD-Panel, einer Hintergrundbeleuchtung für das LCD-Panel und einer Ansteuerschaltung zum Ansteuern des LCD-Panels und der Hintergrundbeleuchtung. Zur Ansteuerung der Hintergrundbeleuchtung für einen lokalen Dimm-Vorgang werden Helligkeitsinformationen für die Hintergrundbeleuchtung in einer Austastlücke des Videosignals codiert.

Die US 2011/0 063 510 A1 offenbart eine Anzeigevorrichtung, mit der zur Bereitstellung von Zusatzinformationen eine sichtbare Lichtkommunikation genutzt wird. Hierzu wird ein lokales Dimm-Verfahren verwendet, um Informationen zu einem Nutzerendgerät über VLC (Visible Light Communication) zu übertragen. Ein Dekoder teilt hierzu ein Empfangssignal in ein Videosignal, das über ein LCD-Display ausgegeben werden soll, und ein Datensignal, das zusätzliche Informationen zum Videosignal umfasst, auf. Das Datensignal umfasst zusätzliche Informationen für eine Vielzahl von LED-Blöcken, wobei ein Datensignal für jeden LED-Block unter Verwendung von VLC bereitgestellt wird. Dem Datensignal wird ein PWM-Signal für das lokale Dimmen hinzugefügt, wobei das Datensignal mit einer mehrfach höheren Frequenz als das PWM-Signal codiert ist. Die LED-Blöcke sind hinter dem LCD-Display angeordnet, um inhaltsbezogene Informationen bereitstellen zu können.

Es ist Aufgabe der vorliegenden Erfindung, ein Kraftfahrzeug anzugeben, welches eine funktional und/oder baulich vereinfachte Ansteuerung einer Innenraumbeleuchtung ermöglicht.

Diese Aufgabe wird durch eine Vorrichtung gemäß den Merkmalen des Patentanspruchs 1 gelöst. Vorteilhafte Ausgestaltungen ergeben sich aus den abhängigen Patentansprüchen.

Es wird ein Kraftfahrzeug vorgeschlagen, das einen Bildschirm zur optischen Signalisierung von veränderlichen Informationen, eine als Innenraumbeleuchtung ausgebildete Leuchteinheit und eine Steuereinheit zum Ansteuern der Leuchteinheit und des Bildschirms umfasst. Die Leuchteinheit umfasst eine Anzahl an Lichtquellen mit jeweils integrierter Slave-Steuereinheit und eine Master-Steuereinheit, wobei die Master-Steuereinheit und die Slave-Steuereinheiten über eine Anordnung von Datenleitungen zum Austausch von Daten gemäß einem vorgegebenen Protokoll verbunden sind, und wobei jede Slave-Steuereinheit einen programmierbaren Konstantstrom-Treiber, einen Signalformer sowie ein Register pro Farbkanal zum Laden einer Anzahl an Helligkeitswerten enthält. Eine jeweilige Leuchteinheit kann beispielsweise in den Türen des Kraftfahrzeugs vorgesehen sein. Ein oder mehrere Leuchteinheiten können im Bereich des Armaturenträgers sowie der Mittelkonsole des Kraftfahrzeugs vorgesehen sein. Jede der Leuchteinheiten umfasst eine Mehrzahl an Lichtquellen mit jeweils integrierter Slave-Steuereinheit, die über eine Anordnung von Datenleitungen zum Austausch von Daten gemäß einem vorgegebenen Protokoll verbunden sind. Ferner umfasst jede der Leuchteinheiten eine Master-Steuereinheit. Eine Steuerung der Mehrzahl an Lichtquellen einer jeweiligen Leuchteinheit erfolgt dann z.B. über die jeweilige Master-Steuereinheit der zugeordneten Leuchteinheit, wobei die Master-Steuereinheit hierzu Daten an die jeweiligen Slave-Steuereinheiten der Lichtquellen überträgt. Eine jeweilige Master-Steuereinheit empfängt in dieser Ausgestaltung Ansteuerdaten zum Ansteuern der Leuchteinheit von einer (zentralen) Steuereinheit zum Ansteuern der Leuchteinheit.

Die Steuereinheit ist eine Steuereinheit für einen Bildschirm zur optischen Signalisierung von veränderlichen Informationen. Der Bildschirm kann beispielsweise das Display einer zentralen Head-Unit sein, welche die Anzeige, ggf. auch Eingabe, von Informationen eines Navigationssystems, eines Entertainmentsystems, Heiz- und Klimaeinstellungen, Meldungen eines Bordcomputers und dergleichen ermöglicht. Die veränderlichen Informationen können Bilder oder Zeichen sowie Animationen oder Videosequenzen sein.

Die Steuereinheit ist dazu ausgebildet, für die Ansteuerung des Bildschirms ein Videosignal auszugeben. Das Videosignal umfasst eine Sequenz von Videobildern mit jeweils einem Overscan-Bereich. Die Sequenz von Videobildern kann ein einzelnes Bild, d.h. ein Standbild, sein oder eine Folge von Bildern umfassen. In dem Overscan-Bereich sind Informationen für eine Ansteuerung der Leuchteinheit kodiert. Die Steuereinheit ist ferner dazu ausgebildet, die Sequenz von Videobildern parallel und synchronisiert der Leuchteinheit und dem Bildschirm zuzuführen.

Der Bildschirm ist dazu ausgebildet, die in der Sequenz von Videobildern vorgesehenen Bildinformationen zur optischen Signalisierung auszuwerten und die in dem Overscan-Bereich enthaltenen Informationen zu ignorieren. Die integrierte Master-Steuereinheit ist dazu ausgebildet, die für die Ansteuerung der Leuchteinheit relevanten Informationen aus dem Overscan-Bereich auszulesen und zu verarbeiten und die Leuchteinheit analog zur Steuerung des Bildschirms mit einem Videosignal anzusteuern.

Der Bildschirm wertet dabei in herkömmlicher Weise die in der Sequenz von Videobildern vorgesehenen Bildinformationen zur optischen Signalisierung aus. Die in dem Overscan-Bereich enthaltenen Informationen werden durch den Bildschirm ignoriert. Demgegenüber sind die für die Ansteuerung einer Leuchteinheit relevanten Informationen in dem Overscan-Bereich enthalten und werden durch die Leuchteinheit, z.B. das Master-Steuergerät, ausgelesen und verarbeitet. Dadurch ist es möglich, die Leuchteinheit - analog zu einem Bildschirm - mit einem Videosignal anzusteuern, wobei die dazu erforderlichen Informationen in dem Overscan-Bereich des für den Bildschirm vorgesehenen Videosignals enthalten sind.

Im Ergebnis ist es möglich, die Steuereinheit für den Bildschirm für eine oder mehrere Leuchteinheiten des Kraftfahrzeugs zu nutzen und insbesondere auf gesonderte Steuereinheiten für die Leuchteinheit(en) zu verzichten. Ein weiterer Vorteil besteht darin, dass eine schnelle Datenübertragung von Steuerinformationen zu der oder den Leuchteinheiten möglich ist. Die Ansteuerung der Leuchteinheit(en) erfolgt mit der gleichen Frame-Rate, mit der der Bildschirm angesteuert wird. Dies können z.B. 60 fps (frames per second) sein. Hierdurch ist die Darstellung beliebiger Animationen und/oder Farben auf einer jeweiligen Leuchteinheit möglich. Änderungen der Darstellungsart oder -geschwindigkeit sind auf diese Weise sehr einfach und schnell zu realisieren.

Eine zweckmäßige Ausgestaltung sieht vor, dass die Leuchteinheit ein Lichtleiterelement zur Verteilung und/oder Richtung von Licht umfasst, das von der Anzahl an Lichtquellen in das Lichtleiterelement gespeist wird. Eine solche Leuchteinheit kann dann als Innenraumbeleuchtung eines Fahrzeugs zur Bereitstellung einer Konturlinienbeleuchtung genutzt werden. Dabei ist es zweckmäßig, wenn die Leuchteinheit eine Anzahl an zeilenförmig angeordneten Lichtquellen, d.h. Lichtquellen, die hintereinander in einer Reihe angeordnet sind, umfasst.

Eine nicht von der Erfindung umfasste Ausgestaltung sieht vor, dass die Informationen in dem Overscan-Bereich derart kodiert sind, dass eine direkte graphische Ansteuerung der Lichtquellen der Leuchteinheit ohne eine Signalwandlung möglich ist. Dies wird dadurch ermöglicht, dass eine jeweilige Leuchteinheit z.B. über die oben bereits beschriebene Master-Steuereinheit verfügt, welche die in dem Overscan-Bereich enthaltenen Informationen ausliest und derart verarbeitet, dass eine lichtquellenweise Ansteuerung der zeilenförmig angeordneten Lichtquellen erfolgt. Die Ansteuerung erfolgt damit analog zu der einzelnen Adressierung der Pixel des Bildschirms.

Eine weitere zweckmäßige Ausgestaltung sieht vor, dass die Vorrichtung eine Mehrzahl an Leuchteinheiten umfasst, wobei in dem Overscan-Bereich für jede der Mehrzahl an Leuchteinheiten Informationen für eine Ansteuerung der jeweiligen Leuchteinheit kodiert sind. Hierdurch ist es möglich, für jede Leuchteinheit eine beliebige Information und/oder Farbe darzustellen. Jede der Leuchteinheiten wird somit als weiterer Bildschirm mit lediglich einziger Zeile betrachtet, deren Lichtquellen gezielt durch die in dem Overscan-Bereich enthaltenen Informationen ansteuerbar sind. Diese Informationen umfassen somit für jeden Frame eine Helligkeit, eine Farbinformation und dergleichen.

Eine nicht von der Erfindung umfasste Ausgestaltung sieht vor, dass der Bildschirm und die Leuchteinheit in dem Videobild nur die für sie für eine Signalisierung relevanten Informationen auslesen und die anderen nicht für sie bestimmten Informationen verwerfen. Dies kann beispielsweise dadurch realisiert werden, dass in dem Overscan-Bereich jeder der Leuchteinheiten ein bestimmter Informationsbereich, z.B. per Adressierung, zum Auslesen und zur Verarbeitung zugewiesen wird.

Gemäß einer weiteren, nicht von der Erfindung umfassten Ausgestaltung kann in der Sequenz von Videobildern in einem jeweiligen Overscan-Bereich ein Audiosignal für eine Audioeinheit kodiert sein. Hierdurch wird es möglich, mit der Steuereinheit für den Bildschirm nicht nur eine Anzahl an Leuchteinheiten anzusteuern, sondern auch einen oder mehrere Lautsprecher. Der oder die Lautsprecher können die bereits vorhandenen Lautsprecher des Kraftfahrzeugs sein oder zusätzlich vorgesehene Signalgeber.

Die Erfindung wird nachfolgend näher anhand eines Ausführungsbeispiels in der Zeichnung erläutert. Es zeigen:
- Fig. 1: eine schematische Darstellung der erfindungsgemäßen Vorrichtung zum Ansteuern einer Mehrzahl an Leuchteinheiten; und
- Fig. 2: eine schematische Darstellung eines einzelnen Videobilds mit einem OverscanBereich, in dem die zum Ansteuern der Leuchteinheiten erforderlichen Informationen enthalten sind.

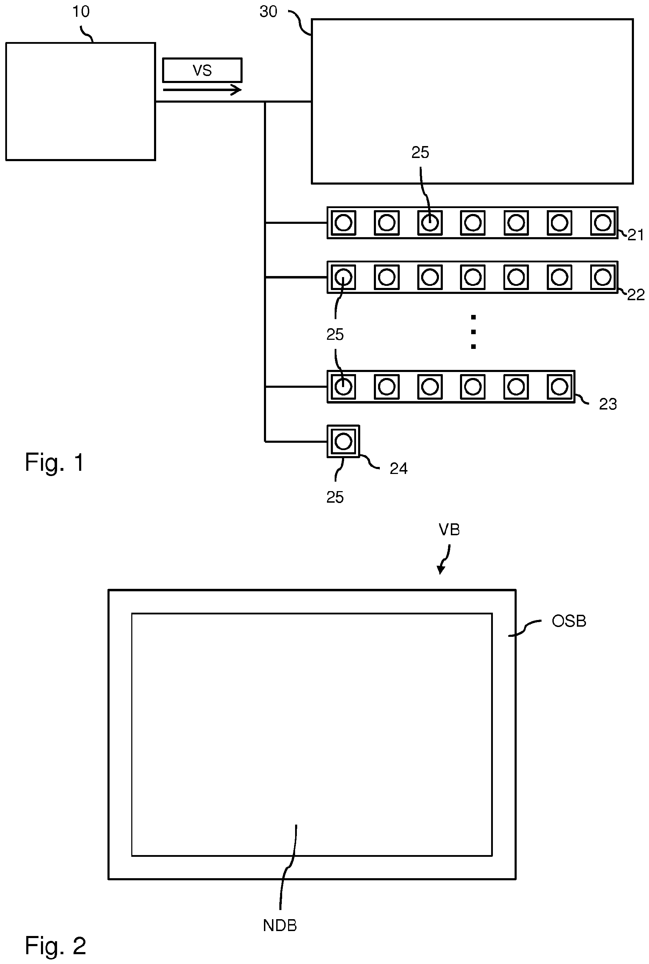

Fig. 1 zeigt eine erfindungsgemäße Vorrichtung zum Ansteuern einer Leuchteinheit. Dargestellt sind eine Steuereinheit 10, eine Mehrzahl an Leuchteinheiten 21, 22, 23, 24 sowie ein Bildschirm 30. Der Bildschirm 30 kann beispielsweise das Display einer sog. Head-Unit des Kraftfahrzeugs sein. Ein solches Display ist beispielsweise mittig im Bereich des Armaturenträgers angeordnet oder stellt ein Display im Bereich des Fahrers dar, welches dem Fahrer des Kraftfahrzeugs die während der Fahrt benötigten Informationen, wie Geschwindigkeit, Drehzahl, Kontrollleuchten, Fahrinformationshinweise, Entertainment-Details und dergleichen visualisiert.

In dem in Fig. 1 gezeigten Ausführungsbeispiel umfassen die Leuchteinheiten 21, 22, 23, 24 zeilenförmig auf einem Träger nebeneinander angeordnete Lichtquellen 25, wobei die Anzahl der Lichtquellen 25 der Leuchteinheiten 21, 22 beispielhaft übereinstimmt und die Anzahl der Lichtquellen 25 der Leuchteinheit 23 geringer ist als die der Leuchteinheiten 21, 22. Lediglich beispielhaft umfasst die Leuchteinheit 24 lediglich eine einzige Lichtquelle 25. Dem Fachmann ist ohne weiteres verständlich, dass dies zum Zwecke der Illustration gewählt ist und jede der Leuchteinheiten 21, 22, 23, 24 eine prinzipiell beliebige Anzahl an Lichtquellen 25 umfassen kann.

Die Leuchteinheiten 21, 22, 23, 24 stellen beispielsweise eine Innenraumbeleuchtung eines Fahrzeugs in Gestalt einer Konturlinienbeleuchtung dar. Die Lichtquellen 25 sind insbesondere Lichtquellen mit jeweils integriertem Controller. Diese verfügen über vier oder sechs Anschlüsse, nämlich einen Betriebsspannungsanschluss, einen Masseanschluss, einen bzw. zwei Dateneingangsanschluss und einen bzw. zwei Datenausgangsanschluss. Die Ansteuerung der Lichtquellen 25 wird durch den in die Lichtquelle integrierten Controller vorgenommen. Ein solcher Controller enthält beispielsweise einen programmierbaren Konstantstromtreiber, einen Signalformer sowie für jeden Farbkanal ein Register, in das entsprechende Registerbreite eine Anzahl an Helligkeitswerten geladen wird. Dadurch ist es möglich, die Lichtquellen in einer Beleuchtungsquelle dicht aneinander zu reihen, so dass pro Meter zwischen einigen zehn bis über einhundert Lichtquellen vorgesehen werden können. Die Lichtquellen 25 sind durch den in ihm enthaltenen Controller einzeln adressierbar.

Die Steuereinheit 10 ist eine Steuereinheit zur optischen Signalisierung von veränderlichen Informationen für den Bildschirm 30. Dementsprechend ist die Steuereinheit 10 dazu ausgebildet, für die Ansteuerung des Bildschirms 30 ein Videosignal VS auszugeben, das eine Sequenz von Videobildern umfasst. In einer dem Fachmann bekannten Weise erfolgt die Ansteuerung des Bildschirms 30 durch die aufeinanderfolgende Darstellung der Sequenz von Videobildern. Um beispielsweise eine flüssige Darstellung von bewegten Informationen zu ermöglichen, erfolgt eine Erneuerung der optischen Signalisierung 60 Mal pro Sekunde, d.h. die Videosequenz VS umfasst 60 fps (frames per second).

Zur Verarbeitung des von der Steuereinheit bereitgestellten Videosignals VS kann der Bildschirm 30 eine nicht näher dargestellte Verarbeitungseinheit umfassen. Durch diese erfolgt die Verarbeitung eines jeweiligen Videobilds VB, wie dieses schematisch in Fig. 2 dargestellt ist. Das Videobild VB umfasst einen Nutzdatenbereich NDB, dessen Informationen auf dem Bildschirm 30 dargestellt werden. Der Nutzdatenbereich NDB umfasst dabei eine Anzahl an n * m Bildpunkt-Informationen, die der Anzahl durch den Bildschirm 30 darstellbaren Bildpunkte n * m entspricht.

Von der Steuereinheit 10 wird über den Nutzdatenbereich NDB hinaus ein sog. Overscan-Bereich OSB ausgegeben. Der Overscan-Bereich OSB umfasst oberhalb, unterhalb, links und rechts des Nutzdatenbereichs NDB enthaltende äußere Bereiche. Diese können z.B. 6 % des Nutzdatenbereichs NDB umfassen. Bei der Darstellung des Nutzdatenbereichs NDB auf dem Bildschirm 30 werden die in dem Overscan-Bereich enthaltenen "leeren" Pixel außer Acht gelassen. Der Overscan-Bereich stammt aus einer Zeit, bei der der Bildschirm als Röhrenbildschirm ausgebildet war, bei denen Bildränder durch eine Maske oder Blende abgedeckt waren, um Ungenauigkeiten und Geometrieabweichungen am Rand zu kaschieren und dadurch einen sauberen, geraden Bildabschluss garantieren zu können. Daher wurde bei der Produktion von Filmen und Videos und Fernsehersendungen dieser Overscan-Bereich berücksichtigt, der jedoch keine relevanten Bildelemente, wie z.B. Einblendungen oder Menüs, enthalten durfte. Bei Bildschirmen 30 mit aktiven Punkten, wie z.B. LCD- oder Plasmabildschirmen, kann das Bild pixelgenau dargestellt werden, so dass kein Overscan-Bereich nötig ist. So gesehen hat der Overscan-Bereich technisch gesehen eine lediglich historische Bedeutung, wird jedoch häufig auch bei rein digitalen Quellen, wie der Steuereinheit 10, verwendet.

Erfindungsgemäß wird die von der Steuereinheit 10 bereitgestellte Sequenz von Videobildern VB mit dem Overscan-Bereich OSB nicht nur dem Bildschirm 30, sondern auch den Leuchteinheiten 21, 22, 23, 24 zur Verarbeitung zugeführt. Die jeweilige Verarbeitung erfolgt z.B. durch die eingangs erwähnten und in Fig. 1 nicht dargestellten Master-Steuereinheiten. In dem Overscan-Bereich ist für eine jeweilige Leuchteinheit 21, 22, 23, 24 eine Information für eine Ansteuerung der jeweiligen Leuchteinheiten 25 der jeweiligen Leuchteinheiten 21, 22, 23, 24 kodiert.

Die Leuchteinheiten 21, 22, 23, 24 werden bei der Ansteuerung mit Hilfe des Videosignals VS, das die Sequenz von Videobildern VB umfasst, als Bildschirme behandelt, die eine Anzahl an Leuchtpunkten umfassen, die der Anzahl an Lichtquellen 25 (z.B. RGB-LEDs) entspricht. Hierzu werden die in dem Overscan-Bereich OSB enthaltenen Informationen ausgewertet und z.B. durch die Master-Steuereinheit einer jeweiligen Leuchteinheit 21, 22, 23, 24 verarbeitet, wodurch die Lichtquellen 25 individuell hinsichtlich Farbkanal und Amplitude angesteuert werden.

Um die gleichzeitige Ansteuerung einer Mehrzahl an Leuchteinheiten 21, 22, 23, 24, wie in Fig. 1 gezeigt, ermöglichen zu können, kann den jeweiligen Leuchteinheiten 21, 22, 23, 24 eine jeweilige Adresse zugewiesen sein, welchen beispielsweise wiederum in einem jeweiligen Videobild VB eine Adresse in dem Overscan-Bereich OSB zugewiesen ist. Dadurch ist es möglich, dass der Bildschirm 30 und die Leuchteinheiten 21, 22, 23, 24 in dem Videobild nur die für sie für eine Signalisierung relevanten auslesen und die anderen nicht für sie bestimmten Informationen verwerfen.

Somit sind in einem jeweiligen Videobild VB Informationen für die Leuchteinheiten 21, 22, 23, 24 enthalten, welche die außerhalb der Bildschirmpunkte des Bildschirms liegenden Lichtquellen 25 jeweiliger Leuchteinheiten 21, 22, 23, 24 ansteuern.

Eine beispielhafte Anwendung besteht darin, dass eine Kamera des in den Figuren nicht dargestellten Kraftfahrzeugs einen Fußgänger im Frontbereich aufzeichnet. Der Fußgänger kann auf dem Bildschirm 30 im Fahrzeuginnenraum als Video angezeigt werden. Zusätzlich zu dieser Information kann über die Ansteuerung, z.B. einer oder mehrerer Leuchteinheiten 21, 22, 23, 24 eine Ansteuerung durch Informationen im Overscan-Bereich OSB derart erfolgen, dass die Bewegung des Fußgängers simultan im Sichtbereich im Innenraum ausgeleuchtet wird. Dies erleichtert das Erkennen einer Gefahrensituation für den Fahrer des Kraftfahrzeugs.

Die Ansteuerung jeweiliger Lichtquellen 25 der Leuchteinheiten 21, 22, 23, 24 kann prinzipiell mathematisch oder graphisch erfolgen. Durch die vorgeschlagene Nutzung einer Steuereinheit 10 für einen Bildschirm 30 und die Kodierung von Steuerinformationen im Overscan-Bereich OSB jeweiliger Videobilder VB, die von der Steuereinheit 10 ausgegeben werden, erfolgt eine graphische Ansteuerung der jeweiligen Lichtquellen 25. Dadurch sind beliebige Animationen und Farbdarstellungen auf den zeilenförmigen Leuchteinheiten 21, 22, 23, 24 möglich. Insbesondere sind visuelle Änderungen sehr schnell zu visualisieren, da von der Steuereinheit 10 z.B. 60 fps ausgegeben werden.

Die in dem Overscan-Bereich für die Ansteuerung der Leuchteinheiten 21, 22, 23, 24 enthaltenen Informationen sind derart in einem jeweiligen Videobild kodiert, dass die Lichtquellen 25 der Leuchteinheiten 21, 22, 23, 24 direkt angesteuert werden können, ohne dass z.B. durch die jeweilige Master-Steuereinheit der Leuchteinheiten 21, 22, 23, 24 eine Signalwandlung erfolgen müsste. Hierdurch ist es möglich, mit minimalem Aufwand aufwändige Videokonstellationen anzuzeigen.

Ein Vorteil des erfindungsgemäßen Vorgehens besteht darin, dass der in den Videobildern VB ansonsten ungenutzte Bereich im Overscan-Bereich OSB für eine Informationsübertragung für weitere Leuchteinheiten genutzt wird. Es können zusätzlich optische, und sogar akustische, Informationen über bestimmte Situationen im Umfeld eines Kraftfahrzeugs übertragen werden. Weiterhin ist eine schnelle Datenübertragung an die Leuchteinheiten 21, 22, 23, 24 möglich, wodurch aufwändige visuelle Effekte realisierbar sind.

### Bezugszeichenliste

- 10: Steuereinheit
- 20: Leuchteinheit
- 21, 22, 23, 24: Leuchteinheit
- 25: Lichtquellen
- 30: Bildschirm
- NDB: Nutzdatenbereich
- OSB: Overscan-Bereich
- VB: Videobilder
- VS: Videosequenz p

## Patentansprüche

1. Kraftfahrzeug, umfassend
- einen Bildschirm (30) zur optischen Signalisierung von veränderlichen Informationen,
- eine als Innenraumbeleuchtung ausgebildete Leuchteinheit (21-24), die eine Mehrzahl an Lichtquellen (25) mit jeweils integrierter Slave-Steuereinheit und eine Master-Steuereinheit umfasst, und
- eine Steuereinheit (10) zum Ansteuern der Leuchteinheit (21-24) und des Bildschirms (30),
- wobei die Master-Steuereinheit und die Slave-Steuereinheiten über eine Anordnung von Datenleitungen zum Austausch von Daten gemäß einem vorgegebenen Protokoll verbunden sind, und
- wobei jede Slave-Steuereinheit einen programmierbaren Konstantstrom-Treiber, einen Signalformer sowie ein Register pro Farbkanal zum Laden einer Anzahl an Helligkeitswerten enthält,
- wobei die Steuereinheit (10) dazu ausgebildet ist,
- für die Ansteuerung des Bildschirms (30) ein Videosignal (VS) auszugeben, das eine Sequenz von Videobildern (VB) mit jeweils einem Overscan-Bereich (OSB) umfasst, wobei in dem Overscan-Bereich (OSB) Informationen für eine Ansteuerung der Leuchteinheit (21-24) codiert sind;
= die Sequenz von Videobildern (VB) parallel der Leuchteinheit (21-24) und dem Bildschirm (30) zuzuführen;
- wobei der Bildschirm (30) dazu ausgebildet ist, die in der Sequenz von Videobildern (VS) vorgesehenen Bildinformationen zur optischen Signalisierung auszuwerten und die in dem Overscan-Bereich enthaltenen Informationen zu ignorieren; und
- wobei die integrierte Master-Steuereinheit dazu ausgebildet ist, die für die Ansteuerung der Leuchteinheit relevanten Informationen aus dem Overscan-Bereich auszulesen und zu verarbeiten und die Leuchteinheit (21-24) analog zur Steuerung des Bildschirms (30) mit einem Videosignal anzusteuern.

2. Kraftfahrzeug nach Anspruch 1, wobei die Leuchteinheit (21-24) ein Lichtleiterelement zur Verteilung und/oder Richtung von Licht, das von der Anzahl an Lichtquellen in das Lichtleiterelement gespeist wird, umfasst.

3. Kraftfahrzeug nach Anspruch 1 oder 2, wobei die Leuchteinheit (21-24) eine Anzahl an zeilenförmig angeordneten Lichtquellen (25) umfasst.

4. Kraftfahrzeug nach einem der vorhergehenden Ansprüche, wobei diese eine Mehrzahl an Leuchteinheiten (21-24) umfasst, wobei in dem Overscan-Bereich (OSB) für jede der Mehrzahl an Leuchteinheiten (21-24) Informationen für eine Ansteuerung der jeweiligen Leuchteinheit (21-24) codiert sind.

## Claims

1. Motor vehicle, comprising
- a screen (30) for optically signalling variable information,
- a lighting unit (21-24) designed as interior lighting and comprising a plurality of light sources (25), each with an integrated slave control unit, and a master control unit, and
- a control unit (10) for controlling the lighting unit (21-24) and the screen (30),
- wherein the master control unit and the slave control units are connected via an arrangement of data lines for the exchange of data in accordance with a predefined protocol, and
- wherein each slave control unit contains a programmable constant-current driver, a signal shaper and one register per colour channel for loading a number of brightness values,
- wherein the control unit (10) is designed
= for the control of the screen (30), to output a video signal (VS) comprising a sequence of video images (VB) each having an overscan area (OSB), wherein information for control of the lighting unit (21-24) is encoded in the overscan area (OSB);
= to feed the sequence of video images (VB) to the lighting unit (21-24) and to the screen (30) in parallel;
- wherein the screen (30) is designed to evaluate the image information for optical signalling that is provided in the sequence of video images (VS) and to ignore the information contained in the overscan area; and
- wherein the integrated master control unit is designed to read out the information relevant to the control of the lighting unit from the overscan area and to process said information and to control the lighting unit (21-24) with a video signal analogously to the control of the screen (30).

2. Motor vehicle according to Claim 1, wherein the lighting unit (21-24) comprises a light guide element for distributing and/or directing light that is fed into the light guide element from the number of light sources.

3. Motor vehicle according to Claim 1 or 2, wherein the lighting unit (21-24) comprises a number of linearly arranged light sources (25).

4. Motor vehicle according to any of the preceding claims, wherein this comprises a plurality of lighting units (21-24), wherein information for control of the respective lighting unit (21-24) is encoded in the overscan area (OSB) for each of the plurality of lighting units (21-24).

## Revendications

1. Véhicule automobile, comprenant
- un écran (30) pour la signalisation optique d'informations variables,
- une unité d'éclairage (21 à 24) réalisée sous la forme d'un éclairage d'habitacle et comprenant une pluralité de sources de lumière (25) avec respectivement une unité de commande esclave et une unité de commande maître intégrées, et
- une unité de commande (10) pour piloter l'unité d'éclairage (21 à 24) et l'écran (30),
- dans lequel l'unité de commande maître et les unités de commande esclaves sont reliées par l'intermédiaire d'un agencement de lignes de données pour échanger des données selon un protocole prédéfini, et
- dans lequel chaque unité de commande esclave comporte un circuit de commande de courant constant, un circuit de conformation de signaux ainsi qu'un registre par canal de couleur pour charger un nombre donné de valeurs de luminosité,
- dans lequel l'unité de commande (10) est réalisée pour
= sortir pour le pilotage de l'écran (30) un signal vidéo (VS) qui comprend une séquence d'images vidéo (VB) avec respectivement une zone de surbalayage (OSB), dans lequel des informations pour un pilotage de l'unité d'éclairage (21 à 24) sont codées dans la zone de surbalayage (OSB) ;
= exécuter la séquence d'images vidéo (VB) en parallèle à l'unité d'éclairage (21 à 24) et à l'écran (30) ;
- dans lequel l'écran (30) est réalisé pour évaluer les informations d'image prévues dans la séquence d'images vidéo (VS) et ignorer les informations contenues dans la zone de surbalayage ; et
- dans lequel l'unité de commande maître intégrée est réalisée pour lire et traiter à partir de la zone de surbalayage les informations pertinentes pour le pilotage de l'unité d'éclairage et pour piloter l'unité d'éclairage (21 à 24) de manière analogue à la commande de l'écran (30) à l'aide d'un signal vidéo.

2. Véhicule automobile selon la revendication 1, dans lequel l'unité d'éclairage (21 à 24) comprend un élément de guidage de lumière pour répartir et/ou diriger la lumière qui est alimentée par le nombre donné de sources de lumière dans l'élément de guidage de lumière.

3. Véhicule automobile selon la revendication 1 ou 2, dans lequel l'unité d'éclairage (21 à 24) comprend un nombre donné de sources de lumière (25) disposées en rangées.

4. Véhicule automobile selon l'une quelconque des revendications précédentes, dans lequel celui-ci comprend une pluralité d'unités d'éclairage (21 à 24), dans lequel dans la zone de surbalayage (OSB) des informations pour un pilotage de l'unité d'éclairage (21 à 24) respective sont codées pour chacune de la pluralité d'unités d'éclairage (21 à 24).
